# EUROPÄISCHE PATENTANMELDUNG

(11) **EP 4 831 050 A2**
(43) Veröffentlichungstag der Anmeldung: **28.10.2026**
(21) Anmeldenummer: 26166845.3
(22) Anmeldetag: 23.03.2026
(51) Int. Cl.: B62H 3/08, B60R 9/00, B62H 3/12, F16M 11/00, B62H 3/10

(54) **BEFESTIGUNGSSYSTEM ZUR BEFESTIGUNG EINES GEGENSTANDS WIE EINES FAHRRADRAHMENS AN EINER TRÄGERSTRUKTUR**

(30) Priorität: 31.03.2025 DE 102025112527
(71) Anmelder: Paulchen System GmbH, 22549 Hamburg (DE)
(72) Erfinder: Kerkow, Morris, 22549 Hamburg (DE); Schlüter, Tim, 22549 Hamburg (DE)
(74) Vertreter: Uexküll & Stolberg

(57) **Zusammenfassung**

Ein Befestigungssystem (1) zur Befestigung eines Gegenstands wie eines Fahrradrahmens an einer Trägerstrukturumfasst eine Befestigungsstrebe (2), die sich entlang einer Längsachse erstreckt und an der Trägerstruktur anbringbar ist. Das Befestigungssystem (1) umfasst weiter einen Anlagekörper (4) zur Anlage an der Befestigungsstrebe (2), der einem Fixiermechanismus (5) aufweist, wobei Fixiermechanismus (65) in eine Fixposition überführbar ist, in der der Befestigungsschlitten (4) auf der Befestigungsschiene (2) fixiert ist. Das Befestigungssystem (1) umfasst weiter ein Befestigungselement (6) zur Anbringung am Fahrradrahmen und ein Befestigungsarm (7), der das Befestigungselement (6) mit dem Anlagekörper (4) verbindet. Der Befestigungsarm (7) ist als Hohlprofil ausgebildet, das einen Hohlraum (8) umgibt. In dem Hohlraum (8) ist eine erste Welle (9) drehbar gelagert, die an ihrem dem Anlagekörper (4) zugewandten Ende (10) eine erste Kopplungsschnittstelle (11) aufweist. Der Fixiermechanismus (5) weist an seinem dem Befestigungsarm (7) zugewandten Ende (12) eine zweite Kopplungsschnittstelle (13) auf. Der Befestigungsarm (7) ist mit dem Anlagekörper (4) kippbar verbunden und von einer ersten Position in eine zweite Position relativ zu der Befestigungsschiene (2) kippbar. In der ersten Position des Befestigungsarms (7) steht die erste Kopplungsschnittstelle (11) mit der zweiten Kopplungsschnittstelle (13) in Eingriff, so dass durch Drehen der ersten Welle (9) relativ zu dem Befestigungsarm (7) der Fixiermechanismus (5) in die Fixposition überführbar ist. In der zweiten Position des Befestigungsarms (7) stehen die erste Kopplungsschnittstelle (11) und die zweite Kopplungsschnittstelle (13) außer Eingriff.

## Beschreibung

### TECHNISCHES GEBIET

Die vorliegende Erfindung betrifft ein Befestigungssystem zur Befestigung eines Gegenstands wie eines Fahrradrahmens an einer Trägerstruktur, insbesondere an einem Fahrradträger.

### HINTERGRUND DER ERFINDUNG

Fahrradfahren erfreut sich seit Jahren wachsender Beliebtheit, sei es als umweltfreundliches Fortbewegungsmittel, sportliche Freizeitaktivität oder während des Urlaubs. Soll das Fahrrad mit in den Urlaub, auf eine Radtour oder ins Wochenende genommen werden, steht man oft vor der Herausforderung, das Fahrrad sicher zu transportieren. Hierfür sind unterschiedlichste Fahrradträger erhältlich. Fahrradträger ermöglichen es, Fahrräder sicher, komfortabel und effizient mit dem Auto zu transportieren. Dabei gibt es verschiedene Modelle, die auf unterschiedliche Fahrzeugtypen und Bedürfnisse zugeschnitten sind, wie Dachträger, Heckklappenträger oder Anhängerkupplungsträger. Insbesondere bei den Heckklappen- und Anhängerkupplungsträgern werden die Räder des Fahrrads meist auf eine Schiene gestellt und dort befestigt. Zusätzlich ist eine stabile Befestigung des Fahrradrahmens an der Trägerstruktur des Fahrradträgers notwendig. Eine solche Befestigung erfolgt üblicherweise mittels eines Befestigungsarms, der im Rahmendreieck des Fahrrads, also insbesondere am Unter-, Ober- oder Sitzrohr des Fahrradrahmens einerseits und am Fahrradträger andererseits befestigt wird.

Um Fahrräder mit unterschiedlichen Rahmengeometrien und/oder mehrere Fahrräder auf einem Fahrradträger aufnehmen zu können, muss der Befestigungsarm an unterschiedlichen Befestigungspunkten an der Trägerstruktur des Fahrradträgers angebracht werden können. Kann der Befestigungsarm bspw. in seiner Position relativ zu der Trägerstruktur des Fahrradträgers nur wenig variiert werden, ist ein Befestigen des Fahrrads auf dem Fahrradträger umständlich und zeitaufwendig.

Es ist daher Aufgabe der vorliegenden Erfindung, ein Befestigungssystem bereitzustellen, das die Befestigung eines Fahrrads an einer Trägerstruktur vereinfacht.

### ZUSAMMENFASSUNG DER ERFINDUNG

Die Aufgabe wird von einem Befestigungssystem, umfassend die Merkmale gemäß Patentanspruch 1, gelöst. Bevorzugte Ausführungsformen sind in den Unteransprüchen beschrieben.

Gemäß der vorliegenden Erfindung umfasst das Befestigungssystem eine Befestigungsstrebe, die sich entlang einer Längsachse erstreckt und an der Trägerstruktur anbringbar ist. Das Befestigungssystem umfasst weiter einen Anlagekörper zur Anlage an der Befestigungsstrebe, der einen Fixiermechanismus aufweist. Der Fixiermechanismus ist in eine Fixposition überführbar, in der der Anlagekörper auf der Befestigungsstrebe fixiert ist. Das Befestigungssystem umfasst weiter ein Befestigungselement zur Anbringung am Fahrradrahmen und ein Befestigungsarm, der das Befestigungselement mit dem Anlagekörper verbindet. Der Befestigungsarm ist als Hohlprofil ausgebildet, das einen Hohlraum umgibt. In dem Hohlraum ist eine erste Welle drehbar gelagert, die an ihrem dem Anlagekörper zugewandten Ende eine erste Kopplungsschnittstelle aufweist. Der Fixiermechanismus weist an seinem dem Befestigungsarm zugewandten Ende eine zweite Kopplungsschnittstelle auf. Der Befestigungsarm ist mit dem Anlagekörper kippbar verbunden und von einer ersten Position in eine zweite Position relativ zu der Befestigungsstrebe kippbar. In der ersten Position des Befestigungsarms steht die erste Kopplungsschnittstelle mit der zweiten Kopplungsschnittstelle in Eingriff, so dass durch Drehen der ersten Welle relativ zu dem Befestigungsarm der Fixiermechanismus in die Fixposition überführbar ist. In der zweiten Position des Befestigungsarms stehen die erste Kopplungsschnittstelle und die zweite Kopplungsschnittstelle außer Eingriff.

Bevorzugt weist das Befestigungselement eine Öffnung auf, durch die die erste Welle zugänglich ist und relativ zu dem Befestigungsarm gedreht werden kann. Bevorzugt ist die erste Welle an ihrem dem Anlagekörper abgewandten Ende so ausgebildet, dass sie manuell oder mithilfe eines Werkzeugs gegriffen und relativ zu dem Befestigungsarm gedreht werden kann. Beispielsweise weist das dem Anlagekörper abgewandten Ende der Welle einen Sterngriff, Flügelgriff, Außensechskant, Innensechskant oder Innensechsrund auf. Somit kann der Fixiermechanismus in der ersten Position des Befestigungsarms von dem Befestigungselement aus manuell oder mit einem Werkzeug in die Fixposition überführt werden. Die vorliegende Erfindung ermöglicht eine einfache Bedienung, insbesondere ein einfaches Fixieren des Befestigungsschlittens auf der Befestigungsschiene.

Erfindungsgemäß ist das Befestigungssystem geeignet, einen Fahrradrahmen an einer Trägerstruktur zu befestigen. Die vorliegende Erfindung ist aber nicht auf die Befestigung von Fahrradrahmen limitiert. Mithilfe des Befestigungselements können auch andere Gegenstände zumindest in einem Abschnitt umschlungen werden und so mithilfe des Befestigungssystems an einer Trägerstruktur fixiert werden.

Gemäß einer Ausführungsform der vorliegenden Erfindung weist der Fixiermechanismus eine zweite Welle auf, die relativ zu dem Anlagekörper drehbar angeordnet ist, wobei die erste Kopplungsschnittstelle und die zweite Kopplungsschnittstelle in der ersten Position des Befestigungsarms eine formschlüssige Verbindung zur Übertragung eines Drehmoments bilden. Bevorzugt ist die formschlüssige Verbindung zwischen der ersten Kopplungsschnittstelle und der zweiten Kopplungsschnittstelle in der ersten Position des Befestigungsarms hergestellt und in der zweiten Position des Befestigungsarms getrennt. Eine formschlüssige Verbindung kann technische einfach hergestellt und getrennt werden. Bevorzugt weist die zweite Welle an ihrem dem Befestigungsarm abgewandten Ende ein Außengewinde auf, mit dem die zweite Welle durch Drehen der ersten Welle in die Befestigungsstrebe eingeschraubt werden kann, so dass der Anlagekörper auf der Befestigungsstrebe fixiert ist. Ebenfalls bevorzugt weist die zweite Welle an ihrem dem Befestigungsarm abgewandten Ende ein Außengewinde auf, das durch eine Bohrung in der Befestigungsstrebe hindurchgesteckt und durch Drehen der ersten Welle auf einer dem Anlagekörper abgewandten Seite der Befestigungsstrebe mit einer Mutter verschraubt wird, so dass der Anlagekörper auf der Befestigungsstrebe fixiert ist.

Gemäß einer weiteren Ausführungsform der vorliegenden Erfindung ist die erste Welle im Befestigungsarm um eine Drehachse drehbar gelagert und als Rohr ausgebildet, wobei das Rohr an seiner ersten Kopplungsschnittstelle radial einander gegenüberliegende Schlitze aufweist, die sich von dem dem Anlagekörper zugewandten Ende entlang der Drehachse erstrecken und, dass die zweite Kopplungsschnittstelle der zweiten Welle einen Stift aufweist, der in der ersten Position des Befestigungsarms quer zur Drehachse des Rohrs verläuft und ausgebildet ist, in die radial gegenüberliegenden Schlitze des Rohrs einzugreifen. Bevorzugt ist eine Feder vorgesehen, die die erste Welle in Richtung des Anlagekörpers drücken kann und somit die radial gegenüberliegenden Schlitze der ersten Welle über den Stift der zweiten Welle stülpt, um somit die formschlüssige Verbindung zwischen der ersten Kopplungsschnittstelle und der zweiten Kopplungsschnittstelle in der ersten Position des Befestigungsarms herzustellen.

Bevorzugt ermöglicht die Feder ein Anheben der ersten Welle in Richtung des Befestigungselements, falls der Stift der zweiten Welle nicht in die Schlitze der ersten Welle rutschen will. Optional ist die Feder vorgespannt. Bevorzugt ist die Feder als Schraubendruckfeder ausgebildet, die die erste Welle entlang eines Abschnitts der Drehachse umgibt. Weiter bevorzugt weist die erste Welle einen Anschlag für die Feder auf, beispielsweise einen quer zu Drehachse der ersten Welle verlaufenden Stift. Bevorzugt weist der Befestigungsarm im Inneren einen weiteren Anschlag auf, so dass die ggfs, vorgespannte Feder im Inneren des Befestigungsarms einerseits und an der ersten Welle andererseits festgelegt ist und die erste Welle in Richtung des Befestigungsschlittens drückt. Alterative bevorzugt ist der weitere Anschlag an einem Gehäuse des Befestigungselements, bevorzugt im Inneren des Gehäuses des Befestigungselements, ausgebildet, so dass die ggfs, vorgespannte Feder am Gehäuse des Befestigungselements einerseits und an der ersten Welle andererseits festgelegt ist.

Somit ist das Herstellen einer formschlüssigen Verbindung zwischen der ersten und zweiten Kopplungsschnittstellen bei der Bewegung des Befestigungsarms von der zweiten in die erste Position gewährleistet.

Gemäß einer Ausführungsform der vorliegenden Erfindung weist der Anlagekörper weiter einen Sperrmechanismus auf, der dem Befestigungsarm in der ersten Position sperrt, wobei der Sperrmechanismus ausgebildet ist, den Befestigungsarm bei manueller Betätigung des Sperrmechanismus freizugeben, so dass der Befestigungsarm von der ersten in die zweite Position relativ zu der Befestigungstrebe gekippt werden kann. Bevorzugt ist der Sperrmechanismus als Block ausgebildet, der auf dem Befestigungsschlitten manuell verschiebbar angeordnet ist und eine Auskragung des Befestigungsarms formschlüssig umgreift. Der Befestigungsarm kann so schnell und einfach von der ersten in die zweite Position überführt werden.

Gemäß einer weiteren Ausführungsform der vorliegenden Erfindung schließen der Befestigungsarm und die Längsachse der Befestigungsstrebe in der ersten Position einen Winkel von 90° ein, wobei der Befestigungsarm und die Längsachse der Befestigungsstrebe in der zweiten Position parallel zueinander verlaufen. In der ersten Position kann der Befestigungsarm mittels des Befestigungselements beispielsweise im Rahmendreieck des Fahrrads, also insbesondere am Unter-, Ober- oder Sitzrohr des Fahrradrahmens befestigt werden. In der zweiten Position kann der Befestigungsarm platzsparend verstaut werden, beispielsweise, wenn kein Fahrrad an der Trägerstruktur befestigt werden soll.

Gemäß einer Ausführungsform der vorliegenden Erfindung ist die Befestigungsstrebe als Befestigungsschiene und der Analagekörper als Befestigungsschlitten ausgebildet, wobei der Fixiermechanismus von einer Verschiebeposition in die Fixposition überführbar ist, wobei der Befestigungsschlitten in der Verschiebeposition des Fixiermechanismus auf der Befestigungsschiene entlang der Längsachse verschiebbar ist und, wobei der Befestigungsschlitten in der Fixposition des Fixiermechanismus auf der Befestigungsschiene fixiert ist und, wobei in der ersten Position des Befestigungsarms die erste Kopplungsschnittstelle mit der zweiten Kopplungsschnittstelle in Eingriff steht, so dass durch Drehen der ersten Welle relativ zu dem Befestigungsarm der Fixiermechanismus von der Verschiebeposition in die Fixposition überführbar ist. Somit kann der Fixiermechanismus in der ersten Position des Befestigungsarms von dem Befestigungselement aus manuell oder mit einem Werkzeug von der Verschiebeposition in die Fixposition und von der Fixposition in die Verschiebeposition überführt werden. Somit kann der Befestigungsschlitten stufenlos auf der Befestigungsschiene positioniert und von dem Befestigungselement aus auf der Befestigungsschiene fixiert werden. Die vorliegende Erfindung bietet somit den Vorteil, den Befestigungsschlitten an einer Vielzahl von Positionen auf der Befestigungsschiene fixieren zu können und ermöglicht somit eine Vielzahl von Befestigungspunkten des Befestigungsarms an der Trägerstruktur, insbesondere des Fahrradträgers. Darüber hinaus ermöglicht die vorliegende Erfindung eine einfache Bedienung, insbesondere ein einfaches Positionieren und Fixieren des Befestigungsschlittens auf der Befestigungsschiene und damit ein einfaches Positionieren des Befestigungsarms und des Befestigungselements relativ zu dem zu befestigendem Fahrradrahmen.

Bevorzugt weist die Befestigungsschiene eine Längsnut auf, die entlang der Längsachse der Befestigungsschiene verläuft, wobei die Längsnut Nutvorsprünge hat, die sich quer zur Längsachse der Befestigungsschiene erstrecken und bevorzugt weist die zweite Welle an Ihrem der Befestigungsschiene zugewandten Ende eine Verdickung auf, die ausgebildet ist, in die Längsnut einzugreifen und dabei die Nutvorsprünge zu hintergreifen. Bevorzugt ist die Verdickung als T-förmiges Ende der zweiten Welle ausgebildet. Ebenso bevorzugt ist die Verdickung der Weller als Nutmutter ausgebildet, die geeignet ist, die Nutvorsprünge zu hintergreifen. Bevorzugt weist die zweite Welle ein Außengewinde auf, mittels dem die zweite Welle in die Nutmutter eingeschraubt ist und mittels dem bei Drehung der zweiten Welle die Nutmutter in der Längsnut verspannt wird. Alternativ bevorzugt ist die Verdickung als Scheibe ausgebildet, die geeignet ist, die Nutvorsprünge zu hintergreifen, wobei die zweite Welle an Ihrem der Befestigungsschiene zugewandten Ende eine Mutter aufweist, die die Scheibe in Richtung der zweiten Kopplungsschnittstelle drückt und so den Befestigungsschlitten auf der Befestigungsschiene verspannt.

Bevorzugt umfasst das Befestigungselement ein Gehäuse und einen Riemen mit einer Verzahnung, wobei der Riemen ein erstes Ende und ein zweites Ende hat und, wobei der Riemen an seinem ersten Ende mit dem Gehäuse fest verbindbar ist und das zweite Ende mittels eines manuell betätigbaren Rastmechanismus des Befestigungselements spannbar und an dem Gehäuse festlegbar ist. Bevorzugt wird das Befestigungselement an dem Fahrradrahmen befestigt, indem der Riemen beispielsweise ein Rohr des Fahrradrahmens umschlingt. Dadurch ist eine gleichmäßige Druckverteilung über den Umfang des Rohrs des Fahrradrahmens bei dessen Befestigung gewährleistet. Somit kann insbesondere bei Fahrradrahmen aus Carbon eine Beschädigung des Fahrradrahmens bei dessen Befestigung verhindert werden. Alternativ kann das erste Ende des Riemens auch an dem zu befestigendem Gegenstand fixiert werden. Soll beispielsweise eine LKW-Plane befestigt werden, so kann das erste Ende des Riemens zum Beispiel formschlüssig mit der LKW-Plane verbunden werden. Das zweite Ende des Riemens wird dann mittels des manuell betätigbaren Rastmechanismus des Befestigungselements gespannt und an dem Gehäuse festgelegt.

Gemäß einer Ausführungsform der vorliegenden Erfindung umfasst der Rastmechanismus einen am Gehäuse um eine Betätigungsachse drehbar gelagerten Betätigungshebel und einen in dem Gehäuse verfahrbaren Schlitten, wobei das Gehäuse eine Führung zum Führen des Schlittens hat und, wobei der Schlitten mit dem Betätigungshebel verbunden ist und an einer Unterseite Zähne aufweist, die ausgebildet sind, mit der Verzahnung des Riemens zusammenzuwirken. Der Betätigungshebel ermöglicht ein einfaches und schnelles Spannen des Riemens, wenn dieser beispielsweise ein Rohr eines Fahrradrahmens umgreift. Die Führung im Gehäuse gibt dabei den Weg des Schlittens im Gehäuse und relativ zum Riemen vor. Bevorzugt weist der Schlitten einen viereckige Grundkörper auf, wobei an den vier Eckbereichen des Grundkörpers jeweils ein zylindrischer Vorsprung ausgebildet ist. Bevorzugt ist die Führung als zwei oder mehr einander gegenüberliegenden Nuten im Gehäuse ausgebildet. Weiter bevorzugt ist die Führung als vier Nuten ausgebildet, wobei jeweils zwei der Nuten einander gegenüberliegend angeordnet sind. Weiter bevorzugt greift jeder der Vorsprünge in jeweils eine der Nuten der Führung im Gehäuse ein. In anderen Worten: Bevorzugt hat das Gehäuse eine Führung zum Führen des Schlittens, wobei die Führung mehrere Nuten umfasst, die im Inneren des Gehäuses ausgebildet sind. Zwei Nuten sind in Richtung des Riemens von dem ersten Ende zu dem zweiten Ende hintereinander angeordnet. Quer zur Richtung des Riemens von dem ersten Ende zu dem zweiten Ende sind den zwei hintereinanderliegenden Nuten gegenüberliegend zwei weiter Nuten im Gehäuse angeordnet.

Gemäß einer weiteren Ausführungsform der vorliegenden Erfindung hat das Gehäuse einen Riemenkanal zum Einführen des zweiten Endes des Riemens, wobei die Führung des Gehäuses derart ausgebildet ist, dass der Schlitten bei Betätigung des Betätigungshebels in einem ersten Winkelbereich um die Betätigungsachse in Richtung des Riemens verfahren wird bis die Zähne des Schlittens in die Verzahnung des Riemens eingreifen und, dass der Schlitten bei Betätigung des Betätigungshebels in einem zweiten Winkelbereich um die Betätigungsachse parallel zum Riemenkanal verfährt und die Zähne des Schlittens den Riemen zum Spannen des Riemens mitnehmen, wobei sich der zweite Winkelbereich an den ersten Winkelbereich anschließt.

Bevorzugt hat jede der zwei oder mehr einander gegenüberliegenden Nuten der Führung im Gehäuse einen L-förmigen Verlauf, wobei die Langseite des L-förmigen Verlaufs parallel zu dem Riemenkanal verläuft und die Kurzseite des L-förmigen Verlaufs quer zum Riemenkanal orientiert ist. Bewegt sich der Schlitten entlang der Kurzseite des L-förmigen Verlaufs der Führung wird der Schlitten im ersten Winkelbereich des Hebels in Richtung des Riemens verfahren bis die Zähne des Schlittens in die Verzahnung des Riemens eingreifen. Bewegt sich der Schlitten entlang der Langseite des L-förmigen Verlaufs der Führung verfährt der Schlitten parallel zum Riemenkanal, sodass der Schlitten bei Betätigung des Hebels im zweiten Winkelbereich den Riemen in das Gehäuse und durch den Riemenkanal zieht.

Die obige Aufgabe wird auch von einem Befestigungselement, umfassend die Merkmale gemäß Patentanspruch 11, gelöst. Das erfindungsgemäße Befestigungselement kann zusammen mit dem Befestigungssystem gemäß Anspruch 1 oder auch gesondert von diesem verwendet werden.

Erfindungsgemäß umfasst das Befestigungselement zur Befestigung eines Gegenstands wie eines Fahrradrahmens an einer Trägerstruktur ein Gehäuse und einen Riemen mit einer Verzahnung. Der Riemen ist ausgebildet, einen Teilabschnitt des Fahrradrahmens, bspw. ein Rohr im Rahmendreieck, zu umschlingen, und weist ein erstes Ende und ein zweites Ende auf. Der Riemen ist an seinem ersten Ende mit dem Gehäuse fest verbindbar und das zweite Ende ist mittels eines manuell betätigbaren Rastmechanismus des Befestigungselements spannbar und an dem Gehäuse festlegbar. Der Rastmechanismus umfasst einen am Gehäuse um eine Betätigungsachse drehbar gelagerten Betätigungshebel und einen in dem Gehäuse verfahrbaren Schlitten. Das Gehäuse hat einen Riemenkanal zum Einführen des zweiten Endes des Riemens und eine Führung zum Führen des Schlittens. Der Schlitten ist mit dem Betätigungshebel verbunden und weist an einer Unterseite Zähne auf, die ausgebildet sind, mit der Verzahnung des Riemens zusammenzuwirken. Die Führung umfasst mehrere Nuten, die im Inneren des Gehäuses ausgebildet sind. Der Schlitten weist einen viereckigen Grundkörper mit vier Eckbereichen auf, wobei in jedem der vier Eckbereiche jeweils ein Vorsprung ausgebildet ist. Jeder der Vorsprünge greift in jeweils eine der Nuten der Führung im Gehäuse ein. Jede der Nuten der Führung hat einen L-förmigen Verlauf mit einer Langseite und einer Kurzseite. Die Langseite des L-förmigen Verlaufs verläuft parallel zu dem Riemenkanal im Gehäuse und die Kurzseite des L-förmigen Verlaufs ist quer zum Riemenkanal orientiert.

Bevorzugt ist das Befestigungselement über einen Befestigungsarm, einen Befestigungsschlitten und/oder eine Befestigungsschiene mit der Trägerstruktur verbunden. Alternativ bevorzugt ist das Befestigungselement direkt mit der Trägerstruktur verbunden. Erfindungsgemäß ist das Befestigungselement geeignet, Fahrradrahmen an einer Trägerstruktur zu befestigen. Die vorliegende Erfindung ist aber nicht auf die Befestigung von Fahrradrahmen limitiert. Das Befestigungselement kann auch andere Gegenstände zumindest in einem Abschnitt umschlingen und dadurch an einer Trägerstruktur fixieren.

Bevorzugt ist die die Führung des Gehäuses derart ausgebildet, dass der Schlitten bei Betätigung des Betätigungshebels in einem ersten Winkelbereich um die Betätigungsachse in Richtung des Riemens verfahren wird bis die Zähne des Schlittens in die Verzahnung des Riemens eingreifen und, dass der Schlitten bei Betätigung des Betätigungshebels in einem zweiten Winkelbereich um die Betätigungsachse parallel zum Riemenkanal verfährt und die Zähne des Schlittens den Riemen zum Spannen des Riemens mitnehmen, wobei sich der zweite Winkelbereich an den ersten Winkelbereich anschließt.

Gemäß einer Ausführungsform der vorliegenden Erfindung ist der Schlitten über einen Verbindungsbalken mit dem Betätigungshebel verbunden, wobei der Verbindungsbalken mit dem Schlitten an einem ersten Drehpunkt um eine erste Verbindungsachse und mit dem Betätigungshebel an einem zweiten Drehpunkt um eine zweite Verbindungsachse drehbar verbunden ist und, wobei bei vollständiger Betätigung des Betätigungshebels von dem ersten Winkelberiech hin zum zweiten Winkelbereich ein erster Abstand zwischen dem ersten Drehpunkt und dem Riemen, gemessen entlang einer Normalen zu dem Riemen, größer ist als ein zweiter Abstand zwischen dem zweiten Drehpunkt und dem Riemen, gemessen entlang einer Normalen zu dem Riemen. Im Rahmen der vorliegenden Erfindung wird der Begriff "entlang einer Normalen zu dem Riemen" als entlang einer Normalen zu einer Ebene verstanden, die von dem flächigen Riemen aufgespannt wird.

### BESCHREIBUNG DER ERFINDUNG

Die Erfindung wird im Folgenden anhand einer beispielhaften Ausführungsform beschrieben, die in den Figuren dargestellt ist, in denen:
- Figur 1a,: eine perspektivische Ansicht eines erfindungsgemäßen Befestigungssystems, wobei der Befestigungsarm in einer ersten Position angeordnet ist,
- Figur 1b: eine perspektivische Ansicht des Befestigungssystems aus Fig. 1a, wobei der Befestigungsarm in einer zweiten Position angeordnet ist,
- Figur 2: eine perspektivische Ansicht der ersten Kopplungsschnittstelle und der zweite Kopplungsschnittstelle in der zweiten Position des Befestigungsarms,
- Figur 3a: eine schematische Schnittansicht der ersten und zweiten Kopplungsschnittstelle in der zweiten Position des Befestigungsarms,
- Figur 3b: eine schematische Schnittansicht der ersten und zweiten Kopplungsschnittstelle in der ersten Position des Befestigungsarms,
- Figur 4: eine perspektivische Ansicht des Befestigungselements,
- Figur 5: eine perspektivische Ansicht des Befestigungselements aus Figur 4 und
- Figur 6: eine schematische Ansicht der Führung des Schlittens des Befestigungselements zeigt.

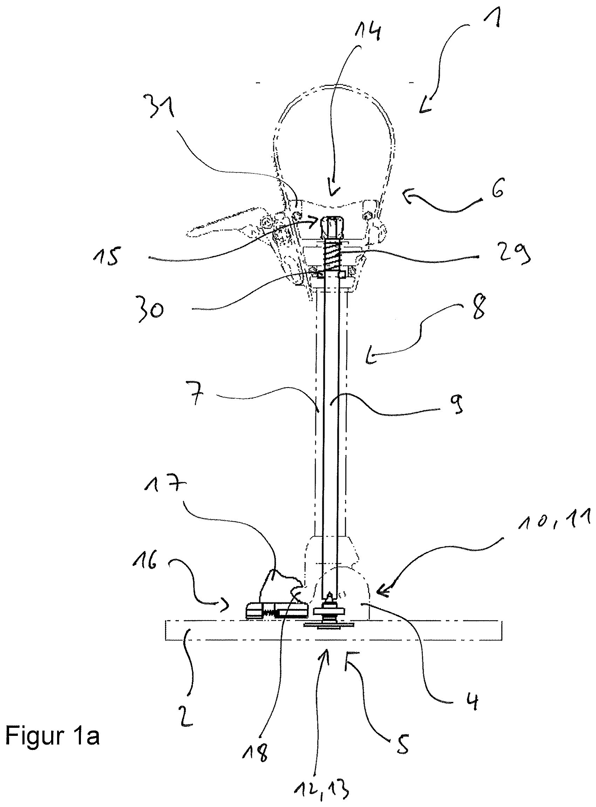

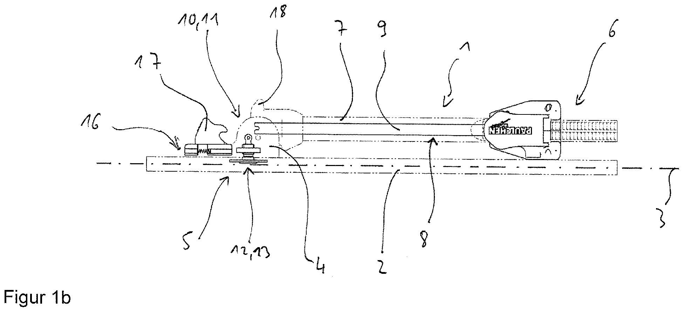

In den Figuren 1a und 1b ist ein Befestigungssystem 1 zur Befestigung eines Gegenstands wie beispielsweise eines Fahrradrahmens an einer Trägerstruktur (nicht dargestellt) gezeigt. Das Befestigungssystem 1 umfasst eine als Befestigungsschiene 2 ausgebildete Befestigungsstrebe, die sich entlang einer Längsachse 3 erstreckt und an der Trägerstruktur anbringbar ist. Das Befestigungssystem 1 umfasst weiter ein als Befestigungsschlitten 4 ausgebildeten Anlagekörper mit einem Fixiermechanismus 5, der von einer Verschiebeposition in eine Fixposition überführbar ist. Der Befestigungsschlitten 4 ist in der Verschiebeposition des Fixiermechanismus 5 auf der Befestigungsschiene 2 entlang der Längsachse 3 verschiebbar und ist in der Fixposition des Fixiermechanismus 5 auf der Befestigungsschiene 2 fixiert.

Das Befestigungssystem 1 umfasst weiter ein Befestigungselement 6 zur Anbringung am Fahrradrahmen (nicht dargestellt) und ein Befestigungsarm 7, der das Befestigungselement 6 mit dem Befestigungsschlitten 4 verbindet. Der Befestigungsarm 7 ist als Hohlprofil ausgebildet, das einen Hohlraum 8 umgibt. In dem Hohlraum 8 ist eine erste Welle 9 drehbar gelagert, die an ihrem dem Befestigungsschlitten 4 zugewandten Ende 10 eine erste Kopplungsschnittstelle 11 aufweist. Der Fixiermechanismus 5 weist an seinem dem Befestigungsarm 7 zugewandten Ende 12 eine zweite Kopplungsschnittstelle 13 auf.

Das Befestigungselement 6 weist eine Öffnung 14 auf, durch die die erste Welle 9 zugänglich ist und relativ zu dem Befestigungsarm 7 gedreht werden kann. Die erste Welle 9 ist an ihrem dem Befestigungsschlitten 4 abgewandten Ende 15 so ausgebildet, dass sie manuell oder mithilfe eines Werkzeugs gegriffen und relativ zu dem Befestigungsarm 7 gedreht werden kann. Bevorzugt weist das dem Befestigungsschlitten 4 abgewandten Ende 15 der ersten Welle 9 einen Sterngriff, Flügelgriff, Außensechskant, Innensechskant oder Innensechrund auf.

Der Befestigungsarm 7 ist mit dem Befestigungsschlitten 4 kippbar verbunden und von einer ersten Position in eine zweite Position relativ zu der Befestigungsschiene 2 kippbar. Figur 1a zeigt den Befestigungsarm 7 in der ersten Position, in der die erste Kopplungsschnittstelle 11 mit der zweiten Kopplungsschnittstelle 13 in Eingriff steht, so dass durch Drehen der ersten Welle 9 relativ zu dem Befestigungsarm 7 der Fixiermechanismus 5 von der Verschiebeposition in die Fixposition überführbar ist. In der ersten Position schließen der Befestigungsarm 7 und die Längsachse 3 der Befestigungsschiene 2 einen Winkel von 90° ein.

Figur 1b zeigt den Befestigungsarm 7 in der zweiten Position, in der die erste Kopplungsschnittstelle 11 und die zweite Kopplungsschnittstelle 13 außer Eingriff stehen. In der zweiten Position verlaufen der Befestigungsarm 7 und die Längsachse 3 der Befestigungsschiene 2 parallel zueinander.

Der Befestigungsschlitten 4 weist weiter einen Sperrmechanismus 16 auf, der dem Befestigungsarm 7 in der ersten Position sperrt. Der Sperrmechanismus 16 ist ausgebildet, den Befestigungsarm 7 bei manueller Betätigung des Sperrmechanismus 16 freizugeben, so dass der Befestigungsarm 7 von der ersten in die zweite Position relativ zu der Befestigungsschiene 2 gekippt werden kann. Der Sperrmechanismus 16 ist als Block 17 ausgebildet, der auf dem Befestigungsschlitten 4 manuell translatorisch parallel zur Befestigungsschiene 2 verschiebbar angeordnet ist und in der ersten Position des Befestigungsarms 7 eine Auskragung 18 des Befestigungsarms 7 formschlüssig umgreift. Bevorzugt weist der Befestigungsschlitten 4 eine Rückstellfeder (nicht dargestellt) auf, die ausgebildet ist, den Block 17 in Richtung des Befestigungsarms 7 zu drücken, so dass der Block 17 die Auskragung 18 in der ersten Position des Befestigungsarms 7 umgreifen kann und die Auskragung 18 und der Block 17 beim Kippen des Befestigungsarms 7 von der zweiten Position in die erste Position formschlüssig verrasten.

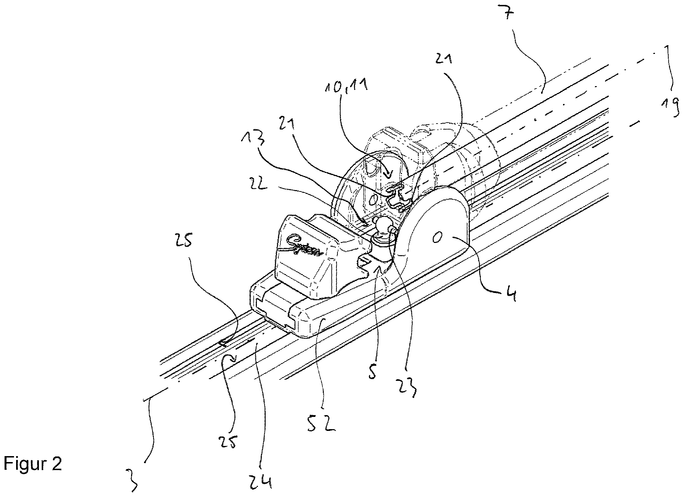

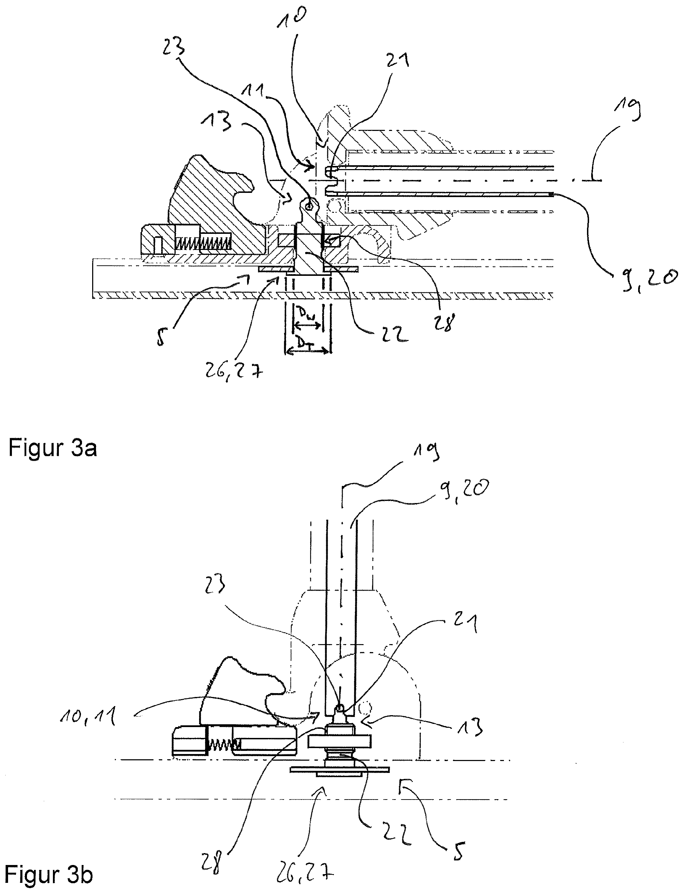

Die Figuren 2, 3a und 3b zeigen die erste Kopplungsschnittstelle 11 und die zweite Kopplungsschnittstelle 13 im Detail.

Die erste Welle 9 im Befestigungsarm 7 ist um eine Drehachse 19 drehbar gelagert und als Rohr 20 ausgebildet. Das Rohr 20 weist an seiner ersten Kopplungsschnittstelle 11 radial einander gegenüberliegende Schlitze 21 auf, die sich von dem dem Befestigungsschlitten 4 zugewandten Ende 10 entlang der Drehachse 19 erstrecken. Wie insbesondere in Figur 2 zu erkennen ist, weist die erste Welle 9 zwei Paare von jeweils zwei radial einander gegenüberliegenden Schlitzen 21, also insgesamt vier Schlitze 21, auf, die sich von dem dem Befestigungsschlitten 4 zugewandten Ende 10 entlang der Drehachse 19 erstrecken.

Der Fixiermechanismus 5 des Befestigungsschlittens 4 weist eine zweite Welle 22 auf, die relativ zu dem Befestigungsschlitten 4 drehbar angeordnet ist. Die zweite Kopplungsschnittstelle 13 der zweiten Welle 22 weist einen Stift 23 auf, der in der ersten Position des Befestigungsarms 7 quer zur Drehachse 19 des Rohrs 20 verläuft und ausgebildet ist, in die radial gegenüberliegenden Schlitze 21 des Rohrs 20 einzugreifen. Somit bilden die erste Kopplungsschnittstelle 11 und die zweite Kopplungsschnittstelle 13 in der ersten Position des Befestigungsarms 7 eine formschlüssige Verbindung zur Übertragung eines Drehmoments.

Wie insbesondere in Figur 2 zu erkennen ist, weist die Befestigungsschiene 2 eine Längsnut 24 auf, die entlang der Längsachse 3 der Befestigungsschiene 4 verläuft. Die Längsnut 24 hat Nutvorsprünge 25, die sich quer zur Längsachse 3 der Befestigungsschiene 2 erstrecken. Die zweite Welle 22 weist an Ihrem der Befestigungsschiene 2 zugewandten Ende 10 eine Verdickung 26 auf (Figuren 3a und 3b), die ausgebildet ist, in die Längsnut 24 einzugreifen und dabei die Nutvorsprünge 25 zu hintergreifen. Die Verdickung 26 ist als T-förmiges Ende 27 der zweiten Welle 22 ausgebildet. Das T-förmige Ende 27 weist einen Außendurchmesser D_{T} auf, der größer ist als der Außendurchmesser D_{W} der zweiten Welle 22. Optional kann das T-förmige Ende 27 direkt die Nutvorsprünge 25 hintergreifen. Alternativ bevorzugt kann eine Scheibe oder ein Stück Blech mit einer Bohrung über die zweite Welle geschoben werden, das an dem T-förmige Ende 27 zur Anlage kommt, wobei die Scheibe oder das Blech die Nutvorsprünge 25 hintergreift. Alternativ kann die Verdickung 26 der zweiten Weller 22 als Nutmutter (nicht dargestellt) ausgebildet sein, die geeignet ist, die Nutvorsprünge 25 zu hintergreifen. Alternative ist es ebenfalls denkbar, dass die Verdickung 26 als Mutter mit gesonderter Scheibe oder Blech mit einem Loch (nicht dargestellt) zum Hintergreifen der Nutvorsprünge 25 ausgebildet ist.

Die zweite Welle 22 weist ein Außengewinde 28 auf, mittels dem die zweite Welle 22 in eine Grundplatte 52, optional in einen Einsatz in der Grundplatte 52, des Befestigungsschlittens 4 oder alternativ in die Nutmutter eingeschraubt ist und mittels dem bei Drehung der zweiten Welle 22 das T-förmige Ende 27 oder alternativ die Nutmutter in der Längsnut 24 verspannt wird. Wird die zweite Welle 22 in eine Nutmutter eingeschraubt, so ist die zweite Welle in der Grundplatte 52 des Befestigungsschlittens 4 in axialer Richtung der zweiten Welle, bspw. durch einen Sicherungsring und/oder einen Wellenabsatz, gesichert.

Wie insbesondere in der Figur 1 dargestellt, weist die erste Welle 9 eine in einem Gehäuse 31 des Befestigungselements 6 angeordnete Feder 29 auf. Optional ist die Feder 29 vorgespannt. Die Feder 29 ist ausgebildet ein Anheben der ersten Welle 9 in Richtung des Befestigungselements 6 zu ermöglichen, so dass die Schlitze 21 der ersten Welle 9 relativ zu dem Stift 23 der zweiten Welle ausgerichtet werden können. Die Feder 29 ist optional weiter ausgebildet, die erste Welle 9 in Richtung des Befestigungsschlittens 4 zu drücken und somit die radial gegenüberliegenden Schlitze 21 der ersten Welle 9 über den Stift 23 der zweiten Welle 22 derart zu stülpen, dass die formschlüssige Verbindung zwischen der ersten Kopplungsschnittstelle 11 und der zweiten Kopplungsschnittstelle 13 in der ersten Position des Befestigungsarms 7 hergestellt wird. Die Feder 29 ist als Schraubendruckfeder ausgebildet, die die erste Welle 9 entlang eines Abschnitts der Drehachse 19 umgibt. Die erste Welle 9 weist weiter einen Anschlag für die Feder 29 auf, der als ein quer zu Drehachse 19 der ersten Welle 9 verlaufender zweiter Stift 30 ausgebildet ist. Das Gehäuse 31 des Befestigungselements 6 weist ebenfalls im Inneren einen zweiten Anschlag auf, so dass die ggfs. vorgespannte Feder 29 im Inneren des Gehäuses 31 einerseits und an der ersten Welle 9 andererseits festgelegt ist und die erste Welle 9 in Richtung des Befestigungsschlittens 4 drückt.

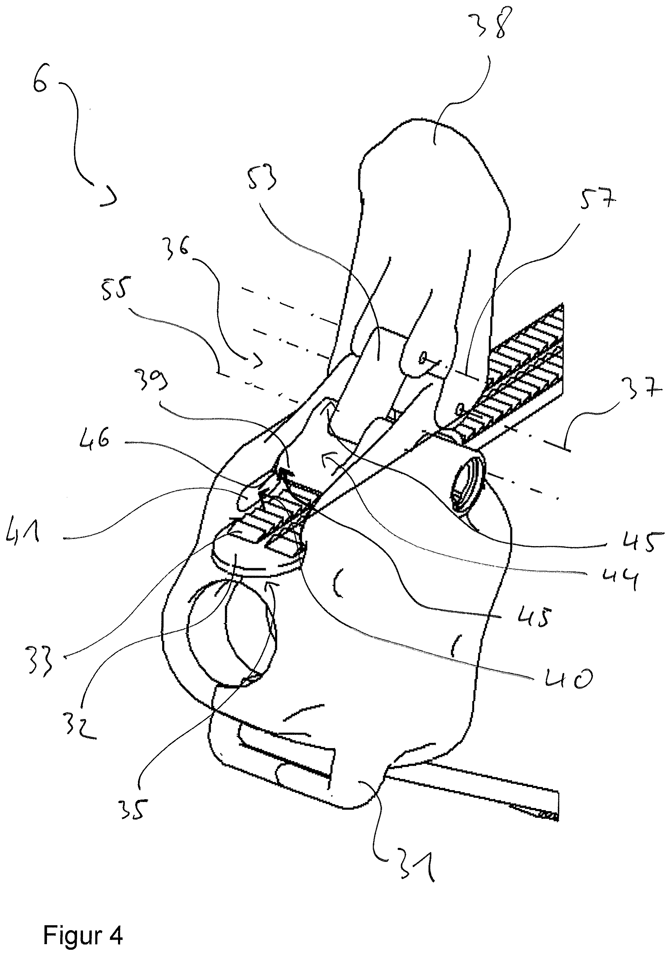

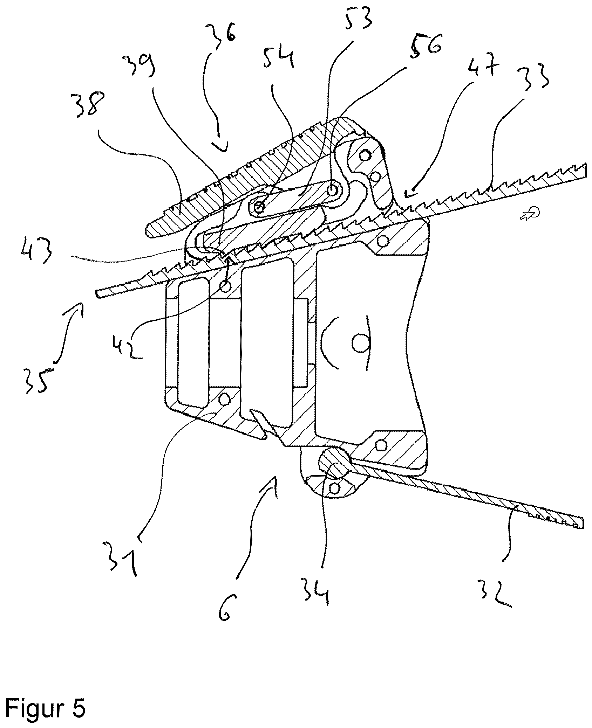

Wie in den Figuren 4 und 5 dargestellt, umfasst das Befestigungselement 6 ein Gehäuse 31 und einen flächigen Riemen 32 mit einer Verzahnung 33. Der Riemen 32 hat ein erstes Ende 34 und ein zweites Ende 35. Der Riemen 32 ist an seinem ersten Ende 34 mit dem Gehäuse 31 fest verbunden. Das zweite Ende 35 ist mittels eines manuell betätigbaren Rastmechanismus 36 des Befestigungselements 6 spannbar und an dem Gehäuse 31 festlegbar.

Der Rastmechanismus 36 umfasst einen am Gehäuse 31 um eine Betätigungsachse 37 drehbar gelagerten Betätigungshebel 38 und einen in dem Gehäuse 31 verfahrbaren Schlitten 39. Das Gehäuse 31 hat eine Führung 40 zum Führen des Schlittens 39, wobei die Führung 40 mehrere Nuten 41 umfasst, die im Inneren des Gehäuses 31 ausgebildet sind. Zwei Nuten 41 sind in Richtung des Riemens 32 von dem ersten Ende 34 zu dem zweiten Ende 35 hintereinander angeordnet. Quer zur Richtung des Riemens 32 von dem ersten Ende 34 zu dem zweiten Ende 35 sind den zwei hintereinanderliegenden Nuten 41 gegenüberliegend zwei weitere Nuten 41 im Gehäuse 31 angeordnet.

Der Schlitten 39 ist über einen Verbindungsbalken 53 mit dem Betätigungshebel 38 verbunden. Der Verbindungsbalken 53 ist mit dem Schlitten 39 an einem ersten Drehpunkt 54 um eine erste Verbindungsachse 55 und mit dem Betätigungshebel 38 an einem zweiten Drehpunkt 56 um eine zweite Verbindungsachse 57 drehbar verbunden. Der Schlitten 39 weist an einer Unterseite 42 Zähne 43 auf. Die Zähne 43 sind ausgebildet, mit der Verzahnung 33 des Riemens 32 zusammenzuwirken. Der Schlitten 39 weist einen viereckigen Grundkörper 44 mit vier Eckbereichen 45 auf. In jedem der vier Eckbereiche 45 ist jeweils ein zylindrischer Vorsprung 46 ausgebildet, wobei jeder der Vorsprünge 46 in jeweils eine der Nuten 41 der Führung 40 im Gehäuse 31 eingreift. Jeweils zwei der vier Vorsprünge 46 erstrecken sich in einander gegenüberliegende Richtungen.

Das Gehäuse 31 hat einen Riemenkanal 47 zum Einführen des zweiten Endes 35 des Riemens 32. Die Führung 40 des Gehäuses 31 ist derart ausgebildet, dass der Schlitten 39 bei Betätigung des Betätigungshebels 38 in einem ersten Winkelbereich um die Betätigungsachse 37 in Richtung des Riemens 32 verfahren wird bis die Zähne 43 des Schlittens 39 in die Verzahnung 33 des Riemens 32 eingreifen und, dass der Schlitten 39 bei Betätigung des Betätigungshebels 38 in einem zweiten Winkelbereich um die Betätigungsachse 37 parallel zum Riemenkanal 47 verfährt und die Zähne 43 des Schlittens 39 den Riemen 32 zum Spannen des Riemens 32 mitnehmen. Der zweite Winkelbereich schließt an den ersten Winkelbereich an. Fig. 5 zeigt den Betätigungshebel am Ende des zweiten Winkelbereichs, d.h. bei vollständiger Betätigung des Betätigungshebels 38. In dieser Position ist der zweite Drehpunkt 56 zwischen Verbindungsbalken 53 und Betätigungshebel 38 entlang einer Normalen zum Riemen 32 näher am Riemen 32 angeordnet als der erste Drehpunkt 54 zwischen Verbindungsbalken 55 und Schlitten 39. In anderen Worten: Bei vollständiger Betätigung des Betätigungshebels 38 ist ein erster Abstand zwischen dem ersten Drehpunkt 54 und dem Riemen 32, gemessen entlang einer Normalen zu dem Riemen 32, größer als ein zweiter Abstand zwischen dem zweiten Drehpunkt 56 und dem Riemen 32, gemessen entlang einer Normalen zu dem Riemen 32. Dabei ist der Begriff "entlang einer Normalen zu dem Riemen" als entlang einer Normalen zu einer Ebene, die von dem flächigen Riemen 32 aufgespannt wird, zu verstehen.

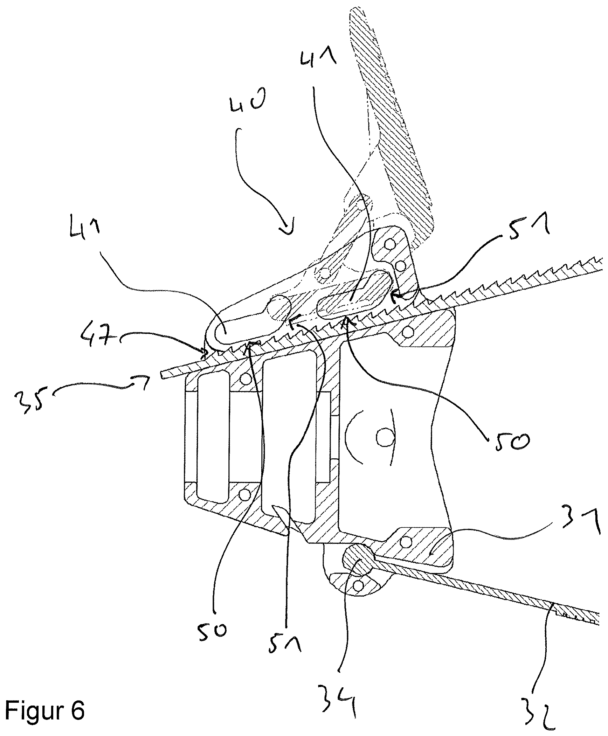

Figur 6 zeigt die Führung 40 im Detail. Wie bereits beschrieben, umfasst die Führung vier Nuten 41, wobei in Figur 6 exemplarisch die zwei in Richtung des Riemens 32 von dem ersten Ende 34 zu dem zweiten Ende 35 hintereinanderliegende Nuten 41 dargestellt sind. Diese zwei in Figur 6 dargestellte Nuten 41 sind derart ausgebildet, dass sie die in Figur 4 gezeigten linken Vorsprünge 46 des Schlittens 39 aufnehmen und während der Betätigung des Betätigungshebels 38 führen.

Jede der vier Nuten 41 der Führung 40 hat einen L-förmigen Verlauf mit einer Langseite 50 und einer Kurzseite 51. Die Langseite 50 des L-förmigen Verlaufs verläuft parallel zu dem Riemenkanal 47 im Gehäuse 31. Die Kurzseite 51 des L-förmigen Verlaufs ist quer zum Riemenkanal 47 orientiert, bevorzugt in einem Winkel von 120° bis 130° zum Riemenkanal 47 angeordnet.

Im Folgenden soll das Spannen des Riemens 32 und das damit verbundene Verfahren des Schlittens 39 in der Führung 40 bei Betätigung des Betätigungshebels 38 anhand der Figuren 4 bis 6 beschrieben werden.

Um beispielsweise einen Fahrradrahmen an der Trägerstruktur zu befestigen, wird der Riemen 32 des Befestigungselements 6 um ein Rohr des Fahrradrahmens geschlungen und in den Riemenkanal 47 eingeführt. Der Riemen 32 wird manuell durch den Riemenkanal 47 des Befestigungselements 6 gezogen, so dass das Rohr des Fahrradrahmens an dem Befestigungselement 6 anliegt und der Riemen 32 das zu befestigende Rohr des Fahrradrahmens möglichst eng umschlingt.

Wird nun der Betätigungshebel 38 im ersten Winkelbereich betätigt, verfährt der Schlitten 39 entlang der Kurzseite 51 des L-förmigen Verlaufs der Nuten 41 in Richtung des Riemens 32 bis die Zähne 43 des Schlittens 39 in die Verzahnung 33 des Riemens 32 eingreifen. Wird der Betätigungshebel 38 dann im zweiten Winkelbereich bis hin zur Vollständigen Betätigung betätigt, verfährt der Schlitten 39 entlang der Langseite 50 des L-förmigen Verlaufs der Führung 40, so dass der Schlitten 39 den Riemen 32 in das Gehäuse 31 und durch den Riemenkanal 47 zieht und damit spannt. Ist das Ende des zweiten Winkelbereichs erreicht, d.h. wurde der Betätigungshebel vollständig betätigt, so ist der zweite Drehpunkt 56 zwischen Verbindungsbalken 55 und Betätigungshebel 38 entlang einer Normalen zum Riemen 32 näher am Riemen 32 angeordnet als der erste Drehpunkt 54 zwischen Verbindungsbalken 55 und Schlitten 39. Dadurch ist der Betätigungshebel 38 arretiert und kann sich beispielsweise durch Zug auf den Riemen 32 nicht von selbst lösen, d.h. nicht von selbst zurück in Richtung des ersten Winkelbereichs verfahren.

Soll der Riemen 32 aus dem Riemenkanal 47 und dem Gehäuse 31 entnommen werden, beispielsweise um das Befestigungselement 6 von dem Fahrradrahmen zu lösen, so wird der Betätigungshebel 38 an den Anfang des ersten Winkelbereichs bewegt. Dadurch bewegt sich der Schlitten 39 entlang der Kurzseite 51 des L-förmigen Verlaufs der Nuten 41 von der Langseite 50 der Nuten 41 weg, so dass die Zähne 43 des Schlittens 39 nicht mehr in die Verzahnung 33 des Riemens 32 eingreifen und der Riemen 32 relative zum Schlitten 39 aus dem Riemenkanal 47 entnommen werden kann.

**Bezugszeichenliste**

| | | | |
|---|---|---|---|
| 1 | Befestigungssystems | DW | Außendurchmesser (zweite Welle) |
| 2 | Befestigungsschiene | 28 | Außengewinde |
| 3 | Längsachse | 29 | Feder (erste Welle) |
| 4 | Befestigungsschlitten | 30 | Zweiter Stift |
| 5 | Fixiermechanismus | 31 | Gehäuse (Befestigungselement) |
| 6 | Befestigungselement | 32 | Riemen |
| 7 | Befestigungsarm | 33 | Verzahnung (Riemen) |
| 8 | Hohlraum | 34 | Erstes Ende (Riemen) |
| 9 | erste Welle | 35 | Zweites Ende (Riemen) |
| 10 | Ende (erste Welle zum Befestigungsschlitten) | 36 | Rastmechanismus |
| | | 37 | Betätigungsachse (Betätigungshebel) |
| 11 | erste Kopplungsschnittstelle | | |
| 12 | Ende (Fixiermechanismus zum Befestigungsarm) | 38 | Betätigungshebel |
| | | 39 | Schlitten |
| 13 | zweite Kopplungsschnittstelle | 40 | Führung (Gehäuse) |
| 14 | Öffnung (Befestigungselement) | 41 | Nuten |
| 15 | Ende (erste Welle zum Befestigungselement) | 42 | Unterseite (Schlitten) |
| | | 43 | Zähne (Schlitten) |
| 16 | Sperrmechanismus | 44 | Grundkörper (Schlitten) |
| 17 | Block (Sperrmechanismus) | 45 | Eckbereich (Grundkörper) |
| 18 | Auskragung (Befestigungsarm) | 46 | Vorsprung (Schlitten) |
| 19 | Drehachse (erste Welle) | 47 | Riemenkanal (Gehäuse) |
| 20 | Rohr (erste Welle) | 50 | Langseite (Führung 41) |
| 21 | Schlitze (erste Welle) | 51 | Kurzseite (Führung 41) |
| 22 | Zweite Welle (Fixiermechanismus) | 52 | Grundplatte (Befestigungsschlitten) |
| 23 | Stift (zweite Welle) | 53 | Verbindungsbalken |
| 24 | Längsnut (Befestigungsschiene) | 54 | Erster Drehpunkt |
| 25 | Nutvorsprünge (Längsnut) | 55 | Erste Verbindungsachse (Verbindungsbalken) |
| 26 | Verdickung (zweite Welle) | | |
| 27 | T-förmiges Ende (zweite Welle) | 56 | Zweiter Drehpunkt |
| DT | Außendurchmesser (T-förmiges Ende) | 57 | Zweite Verbindungsachse (Verbindungsbalken) |

## Patentansprüche

1. Befestigungssystem zur Befestigung eines Gegenstands wie eines Fahrradrahmens an einer Trägerstruktur, umfassend:
eine Befestigungsstrebe (2), die sich entlang einer Längsachse (3) erstreckt und an der Trägerstruktur anbringbar ist,
einen Anlagekörper (4) zur Anlage an der Befestigungsstrebe (2), der einen Fixiermechanismus (5) aufweist, wobei der Fixiermechanismus (5) in eine Fixposition überführbar ist,
in der der Anlagekörper (4) auf der Befestigungsstrebe (2) fixiert ist,
ein Befestigungselement (6) zur Anbringung am Fahrradrahmen und
ein Befestigungsarm (7), der das Befestigungselement (6) mit dem Anlagekörper (4) verbindet,
wobei der Befestigungsarm (7) als Hohlprofil ausgebildet ist, das einen Hohlraum (8) umgibt, wobei in dem Hohlraum (8) eine erste Welle (9) drehbar gelagert ist, die an ihrem dem Anlagekörper (4) zugewandten Ende (10) eine erste Kopplungsschnittstelle (11) aufweist,
wobei der Fixiermechanismus (5) an seinem dem Befestigungsarm (7) zugewandten Ende (12) eine zweite Kopplungsschnittstelle (13) aufweist,
wobei der Befestigungsarm (7) mit dem Anlagekörper (4) kippbar verbunden ist und von einer ersten Position in eine zweite Position relativ zu der Befestigungsstrebe (2) kippbar ist,
wobei in der ersten Position des Befestigungsarms (7) die erste Kopplungsschnittstelle (11) mit der zweiten Kopplungsschnittstelle (13) in Eingriff steht, so dass durch Drehen der ersten Welle (9) relativ zu dem Befestigungsarm (7) der Fixiermechanismus (5) in die Fixposition überführbar ist und,
wobei in der zweiten Position des Befestigungsarms (7) die erste Kopplungsschnittstelle (11) und die zweite Kopplungsschnittstelle (13) außer Eingriff stehen.

2. Befestigungssystem nach Anspruch 1, **dadurch gekennzeichnet, dass** der Fixiermechanismus (5) eine zweite Welle (22) aufweist, die relativ zu dem Anlagekörper (4) drehbar angeordnet ist, wobei die erste Kopplungsschnittstelle (11) und die zweite Kopplungsschnittstelle (13) in der ersten Position des Befestigungsarms (7) eine formschlüssige Verbindung zur Übertragung eines Drehmoments bilden.

3. Befestigungssystem nach Anspruch 2, **dadurch gekennzeichnet, dass** die erste Welle (9) im Befestigungsarm (7) um eine Drehachse (19) drehbar gelagert und als Rohr (20) ausgebildet ist, wobei das Rohr (20) an seiner ersten Kopplungsschnittstelle (11) radial einander gegenüberliegende Schlitze (21) aufweist, die sich von dem dem Anlagekörper (4) zugewandten Ende (10) entlang der Drehachse (19) erstrecken und, dass die zweite Kopplungsschnittstelle (13) der zweiten Welle (22) einen Stift (23) aufweist, der in der ersten Position des Befestigungsarms (7) quer zur Drehachse (19) des Rohrs (20) verläuft und ausgebildet ist, in die radial gegenüberliegenden Schlitze (21) des Rohrs (20) einzugreifen.

4. Befestigungssystem nach einem der vorhergehenden Ansprüche, **dadurch gekennzeichnet, dass** der Anlagekörper (4) weiter einen Sperrmechanismus (16) aufweist, der dem Befestigungsarm (7) in der ersten Position sperrt, wobei der Sperrmechanismus (16) ausgebildet ist, den Befestigungsarm (7) bei manueller Betätigung des Sperrmechanismus (16) freizugeben, so dass der Befestigungsarm (7) von der ersten in die zweite Position relativ zu der Befestigungsstrebe (2) gekippt werden kann.

5. Befestigungssystem nach einem der vorhergehenden Ansprüche, **dadurch gekennzeichnet, dass** der Befestigungsarm (7) und die Längsachse (3) der Befestigungsstrebe (2) in der ersten Position einen Winkel von 90° einschließen und, dass der Befestigungsarm (7) und die Längsachse (3) der Befestigungsstrebe (2) in der zweiten Position parallel zueinander verlaufen.

6. Befestigungssystem nach einem der vorhergehenden Ansprüche, **dadurch gekennzeichnet, dass** die Befestigungsstrebe als Befestigungsschiene und der Analagekörper als Befestigungsschlitten ausgebildet ist,
dass der Fixiermechanismus (5) von einer Verschiebeposition in die Fixposition überführbar ist,
wobei der Befestigungsschlitten (4) in der Verschiebeposition des Fixiermechanismus (5) auf der Befestigungsschiene (2) entlang der Längsachse (3) verschiebbar ist und,
wobei der Befestigungsschlitten (4) in der Fixposition des Fixiermechanismus (5) auf der Befestigungsschiene (2) fixiert ist und
dass in der ersten Position des Befestigungsarms (7) die erste Kopplungsschnittstelle (11) mit der zweiten Kopplungsschnittstelle (13) in Eingriff steht, so dass durch Drehen der ersten Welle (9) relativ zu dem Befestigungsarm (7) der Fixiermechanismus (5) von der Verschiebeposition in die Fixposition überführbar ist.

7. Befestigungssystem nach den Ansprüchen 2 und 6, **dadurch gekennzeichnet, dass** die Befestigungsschiene (2) eine Längsnut (24) aufweist, die entlang der Längsachse (3) der Befestigungsschiene (2) verläuft, wobei die Längsnut (24) Nutvorsprünge (25) hat, die sich quer zur Längsachse (3) der Befestigungsschiene (2) erstrecken und, dass die zweite Welle (22) an Ihrem der Befestigungsschiene (2) zugewandten Ende (15) eine Verdickung (26) aufweist, die ausgebildet ist, in die Längsnut (24) einzugreifen und dabei die Nutvorsprünge (25) zu hintergreifen.

8. Befestigungssystem nach einem der vorhergehenden Ansprüche, **dadurch gekennzeichnet, dass** das Befestigungselement (6) ein Gehäuse (31) und einen Riemen (32) mit einer Verzahnung (33) umfasst, wobei der Riemen (32) ein erstes Ende (34) und ein zweites Ende (35) hat und, wobei der Riemen (32) an seinem ersten Ende (34) mit dem Gehäuse (31) fest verbindbar ist und das zweite Ende (35) mittels eines manuell betätigbaren Rastmechanismus (36) des Befestigungselements (6) spannbar und an dem Gehäuse (31) festlegbar ist.

9. Befestigungssystem nach Anspruch 7, **dadurch gekennzeichnet, dass** der Rastmechanismus (36) einen am Gehäuse (31) um eine Betätigungsachse (37) drehbar gelagerten Betätigungshebel (38) und einen in dem Gehäuse (31) verfahrbaren Schlitten (39) umfasst, wobei das Gehäuse (31) eine Führung (40) zum Führen des Schlittens (39) hat und, wobei der Schlitten (39) mit dem Betätigungshebel (38) verbunden ist und an einer Unterseite (42) Zähne (43) aufweist, die ausgebildet sind, mit der Verzahnung (33) des Riemens (32) zusammenzuwirken.

10. Befestigungssystem nach Anspruch 8, **dadurch gekennzeichnet, dass** das Gehäuse (31) einen Riemenkanal (47) zum Einführen des zweiten Endes (35) des Riemens (32) hat, wobei die Führung (40) des Gehäuses (31) derart ausgebildet ist, dass der Schlitten (39) bei Betätigung des Betätigungshebels (38) in einem ersten Winkelbereich um die Betätigungsachse (37) in Richtung des Riemens (32) verfahren wird bis die Zähne (43) des Schlittens (39) in die Verzahnung (33) des Riemens (32) eingreifen und, dass der Schlitten (39) bei Betätigung des Betätigungshebels (38) in einem zweiten Winkelbereich um die Betätigungsachse (37) parallel zum Riemenkanal (47) verfährt und die Zähne (43) des Schlittens (39) den Riemen (32) zum Spannen des Riemens (32) mitnehmen, wobei sich der zweite Winkelbereich an den ersten Winkelbereich anschließt.

11. Befestigungselement zur Befestigung eines Gegenstands wie eines Fahrradrahmens an einer Trägerstruktur, wobei das Befestigungselement (6) ein Gehäuse (31) und einen Riemen (32) mit einer Verzahnung (33) umfasst,
wobei der Riemen (32) ausgebildet ist, einen Teilabschnitt des Fahrradrahmens zu umschlingen, und ein erstes Ende (34) und ein zweites Ende (35) aufweist,
wobei der Riemen (32) an seinem ersten Ende (34) mit dem Gehäuse (31) fest verbindbar ist und das zweite Ende (35) mittels eines manuell betätigbaren Rastmechanismus (36) des Befestigungselements (6) spannbar und an dem Gehäuse (31) festlegbar ist, wobei der Rastmechanismus (36) einen am Gehäuse (31) um eine Betätigungsachse (37) drehbar gelagerten Betätigungshebel (38) und einen in dem Gehäuse (31) verfahrbaren Schlitten (39) umfasst,
wobei das Gehäuse (31) einen Riemenkanal (47) zum Einführen des zweiten Endes (35) des Riemens (32) und eine Führung (40) zum Führen des Schlittens (39) hat,
wobei der Schlitten (39) mit dem Betätigungshebel (38) verbunden ist und an einer Unterseite (42) Zähne (43) aufweist, die ausgebildet sind, mit der Verzahnung (33) des Riemens (32) zusammenzuwirken,
wobei die Führung (40) mehrere Nuten (41) umfasst, die im Inneren des Gehäuses (31) ausgebildet sind,
wobei der Schlitten (39) einen viereckigen Grundkörper (44) mit vier Eckbereichen (45) aufweist,
wobei in jedem der vier Eckbereiche (45) jeweils ein Vorsprung (46) ausgebildet ist, wobei jeder der Vorsprünge (46) in jeweils eine der Nuten (41) der Führung (40) im Gehäuse (31) eingreift,
wobei jede der Nuten (41) der Führung einen L-förmigen Verlauf mit einer Langseite (50) und einer Kurzseite (51) hat und,
wobei die Langseite (50) des L-förmigen Verlaufs parallel zu dem Riemenkanal (47) im Gehäuse (31) verläuft und die Kurzseite (51) des L-förmigen Verlaufs quer zum Riemenkanal (47) orientiert ist.
